# EUROPÄISCHE PATENTSCHRIFT

(11) **EP 2 921 746 B1**
(45) Veröffentlichungstag und Bekanntmachung des Hinweises auf die Patenterteilung: **04.01.2017**
(21) Anmeldenummer: 15158002.4
(22) Anmeldetag: 06.03.2015
(51) Int. Cl.: F16H 61/688, F16H 61/04

(54) **STEUERVERFAHREN FÜR ANTRIEBSSTRANG UND ANTRIEBSSTRANG**
CONTROL METHOD FOR DRIVE TRAIN AND DRIVE TRAIN
PROCÉDÉ DE COMMANDE D'UNE CHAÎNE CINÉMATIQUE ET CHAÎNE CINÉMATIQUE

(30) Priorität: 18.03.2014 DE 102014103672
(43) Veröffentlichungstag der Anmeldung: 23.09.2015
(73) Patentinhaber: GETRAG Getriebe- und Zahnradfabrik Hermann Hagenmeyer GmbH & Cie KG, 74199 Untergruppenbach (DE)
(72) Erfinder: Kniesburges, Stefan, 50259 Pulheim (DE)
(74) Vertreter: Witte, Weller & Partner Patentanwälte mbB

(56) Entgegenhaltungen:
- EP-A1- 2 549 149
- WO-A1-2005/008103
- DE-A1-102004 031 021
- DE-A1-102004 058 475

## Beschreibung

Die vorliegende Erfindung betrifft ein Verfahren zum Steuern eines Antriebsstranges eines Kraftfahrzeuges, der einen Antriebsmotor und ein Doppelkupplungsgetriebe aufweist, wobei das Doppelkupplungsgetriebe eine erste Reibkupplung und eine zweite Reibkupplung sowie ein erstes Teilgetriebe und ein zweites Teilgetriebe aufweist, um einen ersten Leistungsübertragungszweig und einen zweiten Leistungsübertragungszweig einzurichten, wobei das Doppelkupplungsgetriebe eine Kupplungsaktuatoreinrichtung zum Betätigen der Reibkupplungen sowie eine Schaltaktuatoreinrichtung zum Ein- und Auslegen von Gangstufen des Doppelkupplungsgetriebes aufweist, wobei ausgehend von einem Fahrbetrieb des Kraftfahrzeuges in einer hohen Quellgangstufe eine Mehrfachrückschaltung in eine niedrige Zielgangstufe durchgeführt wird. Die Erfindung betrifft ferner einen Antriebsstrang für ein Kraftfahrzeug.

Antriebsstränge mit derartigen Doppelkupplungsgetrieben sind allgemein bekannt. Durch überschneidende Betätigung der zwei Reibkupplungen kann dabei Antriebsleistung von dem einen Leistungsübertragungszweig zugkraftunterbrechungsfrei auf den anderen Leistungsübertragungszweig übergeben werden. Das eine Teilgetriebe beinhaltet in der Regel die ungeraden Gangstufen und das andere Teilgetriebe die geraden Gangstufen. In dem Teilgetriebe mit den geraden Gangstufen ist vorzugsweise auch die Rückwärtsgangstufe integriert.

Die Kupplungsaktuatoreinrichtung kann Elektromotoren als Aktuatoren beinhalten. Bevorzugt ist jedoch, wenn die Reibkupplungen jeweils mittels geeigneter Hydraulikaktuatoren betätigt werden.

Die Schaltaktuatoreinrichtung kann ebenfalls hydraulische Aktuatoren beinhalten. In diesem Fall ist es bekannt, für jedes Schaltkupplungspaket (das jeweils zwei benachbarte Schaltkupplungen aufweist) einen Schalthydraulikzylinder als Aktuator vorzusehen. Ferner ist es bekannt, zur Betätigung der Schaltkupplungen der Teilgetriebe Elektromotoren einzusetzen. Die Schalt-Elektromotoren können dabei konzentrisch zu der Schaltkupplung angeordnet sein.

In einer weiteren bekannten Ausführungsform werden die Gangstufen des Doppelkupplungsgetriebes mittels wenigstens einer Schaltwalze betätigt. Die Schaltwalze wird dabei vorzugsweise mittels eines Elektromotors angetrieben, kann jedoch auch durch einen Hydraulikantrieb angetrieben sein.

In einer Variante weist das Doppelkupplungsgetriebe genau eine Schaltwalze auf. Bei dieser Ausführungsform sind die Gangwechsel in der Regel rein sequentiell durchzuführen. Mehrfachschaltungen über eine oder mehrere Gangstufen hinweg sind hierbei relativ zeitaufwendig.

In einer weiteren Variante ist es bekannt, für jedes Teilgetriebe eine eigenen Schaltwalze vorzusehen, wobei die Schaltwalzen unabhängig voneinander betätigbar sind. Auch bei dieser Ausführungsform verbleibt ein Problem hinsichtlich relativ langer Schaltzeiten bei Mehrfachschaltungen.

Das vorliegende Steuerverfahren geht von einem Zustand aus, bei dem das Fahrzeug mit einer hohen Quellgangstufe betrieben wird. Wenn ausgehend von diesem Ausgangszustand eine Mehrfach-Rückschaltung erforderlich ist, beispielsweise bei einem Kickdown oder einem Bremsvorgang, kann es bei Doppelkupplungsgetrieben, deren Schaltaktuatoreinrichtung eine oder zwei Schaltwalzen aufweist, zu relativ langen Verzögerungen kommen, bis die richtige Gangstufe eingelegt ist.

DE 10 2004 031 021 A offenbart ein Verfahren und einen Antriebsstrang gemäß dem Oberbegriff der unabhängigen Ansprüche.

Vor diesem Hintergrund ist es eine Aufgabe der Erfindung, ein verbessertes Steuerverfahren für einen Doppelkupplungsgetriebe-Antriebsstrang anzugeben, wobei insbesondere der Komfort verbessert werden kann, sowie einen verbesserten Antriebsstrang anzugeben.

Die obige Aufgabe wird gelöst durch ein Verfahren gemäß Anspruch 1 zum Steuern eines Antriebsstranges eines Kraftfahrzeuges, der einen Antriebsmotor und ein Doppelkupplungsgetriebe aufweist, wobei das Doppelkupplungsgetriebe eine erste Reibkupplung und eine zweite Reibkupplung sowie ein erstes Teilgetriebe und ein zweites Teilgetriebe aufweist, um einen ersten Leistungsübertragungszweig und einen zweiten Leistungsübertragungszweig einzurichten, wobei das Doppelkupplungsgetriebe eine Kupplungsaktuatoreinrichtung zum Betätigen der Reibkupplungen sowie eine Schaltaktuatoreinrichtung zum Ein- und Auslegen von Gangstufen des Doppelkupplungsgetriebes aufweist, mit den folgenden, von einem Fahrbetrieb des Kraftfahrzeuges in einer hohen Quellgangstufe ausgehenden Schritten zum Durchführen einer Mehrfachrückschaltung in eine niedrige Zielgangstufe:
- sofortiges Öffnen der Quellgangstufen-Reibkupplung, die dem Quellgangstufen-Teilgetriebe zugeordnet ist, in dem die Quellgangstufe eingelegt ist, nachdem ein Schaltwunsch für die Mehrfachrückschaltung erhalten ist,
- Nutzen wenigstens einer Zwischengangstufe zur Leistungsübertragung über einen der Zwischengangstufe zugeordneten Zwischengangstufen-Leistungsübertragungszweig, wobei die Zwischengangstufe einem anderen Teilgetriebe als die Zielgangstufe zugeordnet ist und benachbart zu der Zielgangstufe ist, und
- Einlegen der Zielgangstufe sowie überschneidende Betätigung der Reibkupplungen, wobei die der Zielgangstufe zugeordnete Reibkupplung geschlossen wird,
wobei dass das Öffnen der Quellgangstufen-Reibkupplung durchgeführt wird, ohne sofort die Zwischengangstufen-Reibkupplung zu schließen.

Die obige Aufgabe wird ferner durch einen Antriebsstrang eines Kraftfahrzeuges gemäß Anspruch 6 gelöst, der eine Steuervorrichtung beinhaltet, die dazu ausgebildet und eingerichtet ist, das erfindungsgemäße Steuerverfahren durchzuführen.

Das vorliegende Steuerverfahren geht von einem Fahrbetrieb des Kraftfahrzeuges in einer hohen Quellgangstufe aus, also insbesondere der höchsten Gangstufe des Doppelkupplungsgetriebes, oder der zweithöchsten oder der dritthöchsten Gangstufe des Doppelkupplungsgetriebes. Ferner geht das vorliegende Steuerverfahren insbesondere von einem solchen Fahrbetrieb aus, bei dem die Quellgangstufe in einem relativ niedrigen Geschwindigkeitsbereich verwendet wird, derart, dass es aus diesem Fahrbetrieb heraus möglich ist, wenigstens zwei, vorzugsweise jedoch drei oder sogar noch mehr Gangstufen herunterzuschalten, ohne in der Zielgangstufe an die Drehzahlbegrenzung zu gelangen. Eine Mehrfachrückschaltung ist eine Rückschaltung über wenigstens zwei, vorzugsweise jedoch drei oder sogar noch mehr Gangstufen, also z.B. von Gangstufe 6 nach Gangstufe 3.

Die Geschwindigkeit des Kraftfahrzeuges kann dabei insbesondere im Bereich von 30 bis 130 km/h liegen, vorzugsweise im Bereich von 30 bis 100 km/h, und insbesondere im Bereich von 30 bis 80 km/h.

Der Antriebsmotor des bei dem Steuerverfahren verwendeten Antriebsstranges ist vorzugsweise ein Verbrennungsmotor, wobei der Antriebsmotor auch als Hybrid-Motor ausgebildet sein kann. Ferner ist es in manchen Varianten möglich, einen Eingang des Doppelkupplungsgetriebes mit einer elektrischen Maschine zu verbinden, um auf diese Weise einen Hybrid-Antriebsstrang einzurichten.

Durch die Betätigung eines Stellgliedes durch den Fahrer wird einer Steuervorrichtung ein Rückschaltwunsch mitgeteilt beziehungsweise ein solcher Rückschaltwunsch lässt sich aus dieser Betätigung ableiten. Die Steuervorrichtung erzeugt hieraus ein Schaltsignal.

Die sich aus dem ersten Schaltsignal ergebende Zielgangstufe ist vorzugsweise die für den Zustand vor dem Betätigen des Stellgliedes niedrigst mögliche Gangstufe. Hierdurch soll es generell möglich sein, in der so errechneten Zielgangstufe ein maximal mögliches Zug- oder Schubmoment bereitzustellen. Die Zielgangstufe ist, wie gesagt, wenigstens um zwei Stufen niedriger als die Quellgangstufe (beispielsweise Quellgangstufe 7 und Zielgangstufe 5, derart, dass zwischen diesen Gangstufen noch eine Zwischengangstufe einlegbar ist).

Von besonderem Vorzug ist es, wenn die errechnete Zielgangstufe wenigstens drei Gangstufen, insbesondere vier Gangstufen niedriger ist als die Quellgangstufe.

Insbesondere bei Doppelkupplungsgetrieben, deren Schaltaktuatoreinrichtung eine Schaltwalze aufweist, ist es generell bekannt, bei einem derartigen Mehrfach-Rückschaltvorgang sämtliche dazwischenliegenden Gangstufen kurzzeitig einzulegen und über eine überschneidende Betätigung der Reibkupplungen auch mit dem Abtrieb des Kraftfahrzeuges (den angetriebenen Rädern) zu verbinden. Gerade bei größeren Mehrfach-Rückschaltungen ist der hierdurch erforderliche Zeitaufwand bis zum Erreichen der Zielgangstufe jedoch relativ hoch. Die gleiche Problematik kann sich ergeben, wenn die Schaltaktuatoreinrichtung zwei Schaltwalzen aufweist.

Bei Doppelkupplungsgetrieben, deren Schaltaktuatoreinrichtung einzelne, unabhängig voneinander ansteuerbare Schaltzylinder aufweist, ist dieses Problem in der Regel nur in geringerem Maße vorhanden.

Die vorliegende Erfindung geht nun davon aus, dass auf dem Weg von der Quellgangstufe in die Zielgangstufe die der Quellgangstufe zugeordnete Reibkupplung sofort geöffnet wird, ohne sofort die andere Reibkupplung zum Einlegen einer Anschlussgangstufe zu schließen, so dass eine Zugkraftunterbrechung in Kauf genommen wird. Da dies aus einer hohen Quellgangstufe aus erfolgt, ist der hierdurch ggf. auftretende Zugkrafteinbruch für den Fahrer nicht oder nur wenig spürbar, so dass mit dieser Maßnahme keine wesentlichen Komforteinschränkungen einhergehen. Andererseits ermöglicht das sofortige Öffnen der der Quellgangstufe zugeordneten Reibkupplung, dass die Drehzahl des Antriebsmotors sofort ansteigen kann, um für eine Anschlussgangstufe (z.B. eine Zwischengangstufe oder eine Interimsgangstufe) eine geeignete Drehzahl zu erhalten. Das Anpassen der Drehzahl des Antriebsmotors kann dabei vorzugsweise durch eine Antriebsmotor-Drehzahlregelung oder Antriebsmotor-Drehmomentregelung erfolgen.

Unter einem sofortigen Öffnen der der Quellgangstufe zugeordneten Reibkupplung wird insbesondere verstanden, diese Reibkupplung vollständig und/oder schnellstmöglich geöffnet wird, so dass nicht gewartet wird, bis die Drehzahl des Antriebsmotors eine geeignete Drehzahl für eine unmittelbar anschließende Gangstufe erreicht hat.

Durch die Maßnahme, die Reibkupplung der Quellgangstufe nach dem Erfassen eines Schaltwunsches für eine Mehrfachrückschaltung sofort zu öffnen, kann gegenüber herkömmlichen Mehrfachrückschaltungen, die rein sequentiell durchgeführt werden, ein erheblicher Zeitvorteil erzielt werden. Die Zeit bis die Zielgangstufe eingelegt ist, kann bspw. von etwa 2,5 s auf weniger als 1,5 s reduziert werden.

Die Aufgabe wird somit vollkommen gelöst.

Gemäß einer bevorzugten Ausführungsform wird vor der Leistungsübertragung über die Zwischengangstufe eine Interimsgangstufe zur Leistungsübertragung über den der Interimsgangstufe zugeordneten Leistungsübertragungszweig genutzt, wobei der Übergang von der Interimsgangstufe in die Zwischengangstufe durch überschneidende Betätigung der Reibkupplungen erfolgt.

Während die Zwischengangstufe folglich eine unmittelbar benachbarte Gangstufe zu der Zielgangstufe ist, also auf einem anderen Teilgetriebe als die Zielgangstufe angeordnet ist, ist die Interimsgangstufe vorzugsweise dem gleichen Teilgetriebe zugeordnet wie die Zielgangstufe.

In einer Variante kann nach dem Öffnen der Reibkupplung der Quellgangstufe ein längerer Zugkrafteinbruch in Kauf genommen werden, um dann als nächste Gangstufe unmittelbar die Zwischengangstufe einzulegen, die benachbart zu der Zielgangstufe ist, von welchem Zustand aus dann die Zielgangstufe durch überschneidende Betätigung der Reibkupplungen eingelegt wird.

In einer weiteren Variante wird nach dem Öffnen der der Quellgangstufe zugeordneten Reibkupplung zunächst die Interimsgangstufe eingelegt, sofern diese noch nicht eingelegt war, und es wird Leistung über den Leistungsübertragungszweig übertragen, der der Interimsgangstufe zugeordnet ist. Ausgehend hiervon wird dann gewöhnlich durch überschneidende Betätigung der Reibkupplungen ohne Zugkrafteinbruch die Leistungsübertragung auf den anderen Leistungsübertragungszweig übergeben, der der Zwischengangstufe zugeordnet ist. Ausgehend hiervon wird dann die Leistung auf den der Zielgangstufe zugeordneten Leistungsübertragungszweig übergeben (durch überschneidende Betätigung der Reibkupplungen), womit das Steuerverfahren abgeschlossen ist, da die Zielgangstufe zur Leistungsübertragung nach einer Mehrfachrückschaltung verwendet wird.

Wenn Leistung über die Zwischengangstufe übertragen wird, wird die der Zwischengangstufe zugeordnete Reibkupplung gewöhnlich vollständig geschlossen.

Gleiches ist auch möglich, wenn Leistung über die Interimsgangstufe übertragen wird.

Da die Interimsgangstufe in der Regel jedoch unmittelbar im Anschluss an die Quellgangstufe zur Leistungsübertragung genutzt wird, ist es bevorzugt, hierbei die der Interimsgangstufe zugeordnete Reibkupplung nicht vollständig zu schließen. Dies führt dazu, dass die Drehzahl des Antriebsmotors schneller auf eine Zieldrehzahl gebracht werden kann, die an die Zwischengangstufe bzw. die Zielgangstufe angepasst ist.

Ein Teil des Antriebsmomentes wird in diesem Fall nämlich nicht zur Übertragung von Drehmoment über den der Interimsgangstufe zugeordneten Leistungsübertragungszweig genutzt, sondern zum Hochdrehen des Antriebsmotors.

Generell ist es möglich, dass das Steuerverfahren in einem Schubbetrieb durchgeführt wird, bspw. bei einem starken Bremsvorgang.

Besonders bevorzugt erfolgt die Mehrfachrückschaltung jedoch unter Zug.

Eine Mehrfachrückschaltung unter Zug wird gewöhnlich durch ein starkes Niedertreten des Gaspedals eingeleitet, bspw. einen Kick-down, da der Fahrer hierdurch mehr Antriebsmoment zum Beschleunigen anfordert, was insbesondere bei einem Fahren in einer hohen Quellgangstufe bei relativ niedrigen Geschwindigkeiten vorkommen kann, um bspw. ein Überholmanöver einzuleiten oder dergleichen.

Generell ist es möglich, dass das Doppelkupplungsgetriebe zwei Schaltwalzen aufweist, die jeweils einem der zwei Teilgetriebe des Doppelkupplungsgetriebes zugeordnet sind.

Vorzugsweise weist das Doppelkupplungsgetriebe jedoch eine einzelne Schaltwalze zum Ein- und Auslegen von Gangstufen des ersten und des zweiten Teilgetriebes auf.

Auch bei dieser Ausführungsform, die normalerweise ein rein sequentielles Schalten bedingt, kann durch sofortiges Öffnen der der Quellgangstufe zugeordneten Reibkupplung ein deutlich schnelleres Einlegen der Zielgangstufe erfolgen, wobei zwischen der Quellgangstufe und der Zielgangstufe wenigstens eine, insbesondere zwei Gangstufen angeordnet sind.

Bei dem erfindungsgemäßen Steuerverfahren wird ferner vorzugsweise wenigstens eines der folgenden Merkmale realisiert. Während die einzelne Schaltwalze eine oder mehrere Rückschaltungen durchführt, kann die Schließzeit der der Quellgangstufe zugeordneten Reibkupplung stark verkürzt werden, während die andere Reibkupplung länger im Schlupf bleiben kann. Währenddessen dreht die Schaltwalze vorzugsweise so schnell es geht weiter, um in die unteren Gänge zu kommen. Ferner wird hierbei die Motordrehzahl vorzugsweise jeweils an die Drehzahl der Interimsgangstufe und/oder der Zwischengangstufe angepasst, um zumindest in den unteren Gängen ein reibungsloses Synchronisieren zu ermöglichen. Zumindest während eines Teils der gesamtem Rückschaltungen wird keine Zugkraft übertragen, da auf das Erreichen einer Zieldrehzahl des Antriebsmotors gewartet wird und/oder auf das Durchführen einer Synchronisierung.

Das erfindungsgemäße Verfahren wird generell in Verbindung mit einem Antriebsstrang verwendet, der ein Doppelkupplungsgetriebe aufweist. Der Antriebsstrang kann jedoch auch ein automatisiertes Schaltgetriebe (AMT) aufweisen, bei dem zwischen einem Antriebsmotor und einem Getriebe nur eine einzelne Kupplung angeordnet ist und bei dem das Getriebe eine Mehrzahl von Gangstufen aufweist, die jedoch nicht auf Teilgetriebe aufgeteilt sind. Das Stufengetriebe weist in diesem Fall nur eine Eingangswelle und eine Ausgangswelle auf, wobei die Eingangswelle mit einem Ausgangsglied der einzelnen Reibkupplung verbunden ist.

Ferner ist es vorteilhaft, wenn während der Leistungsübertragung über einen der Leistungsübertragungszweige bereits während des Synchronisierens an einer Anschlussgangstufe ein Befüllen der als nächstes zu schließenden Reibkupplung erfolgt. Mit anderen Worten wird die als nächstes zu schließende Reibkupplung bereits vor dem Öffnen der aktuell zur Leistungsübertragung verwendeten Reibkupplung soweit befüllt, dass deren Eingriffspunkt (Kisspoint) erreicht ist. Hierdurch kann nach einem Öffnen der aktuell zur Leistungsübertragung verwendeten Reibkupplung die als nächstes zur Leistungsübertragung zu verwendende Reibkupplung schneller geschlossen werden. Mit anderen Worten kann eine überschneidende Betätigung der Reibkupplungen frühestmöglich eingeleitet werden, nachdem eine Synchronisierung an der Anschlussgangstufe stattgefunden hat.

Die Erfindung ist insbesondere dann anwendbar, wenn der Antriebsstrang ein Doppelkupplungsgetriebe mit mehr als fünf Vorwärtsgangstufen aufweist, insbesondere mehr als sechs Vorwärtsgangstufen, da dies insbesondere bei einem mit einer einzelnen Schaltwalze betätigten Doppelkupplungsgetriebe zu deutlich verlängerten Gesamtschaltzeiten führen kann.

Allerdings lässt sich das erfindungsgemäße Verfahren nicht nur bei schaltwalzenbetätigten Doppelkupplungsgetrieben verwenden, sondern auch bei Doppelkupplungsgetrieben, deren Schaltaktuatoreinrichtung beispielsweise hydraulische Schaltzylinder oder dergleichen aufweist und folglich direkte Mehrfachrückschaltungen generell möglich wären.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform eines erfindungsgemäßen Antriebsstranges
- Fig. 2: eine schematische Darstellung in Form eines Zeitablaufdiagramms in einer Ausführungsform eines erfindungsgemäßen Steuerverfahrens; und
- Fig. 3: eine der Fig 2 entsprechende Darstellung in Form eines Zeitablaufdiagramms in einer weiteren Ausführungsform eines erfindungsgemäßen Steuerverfahrens.

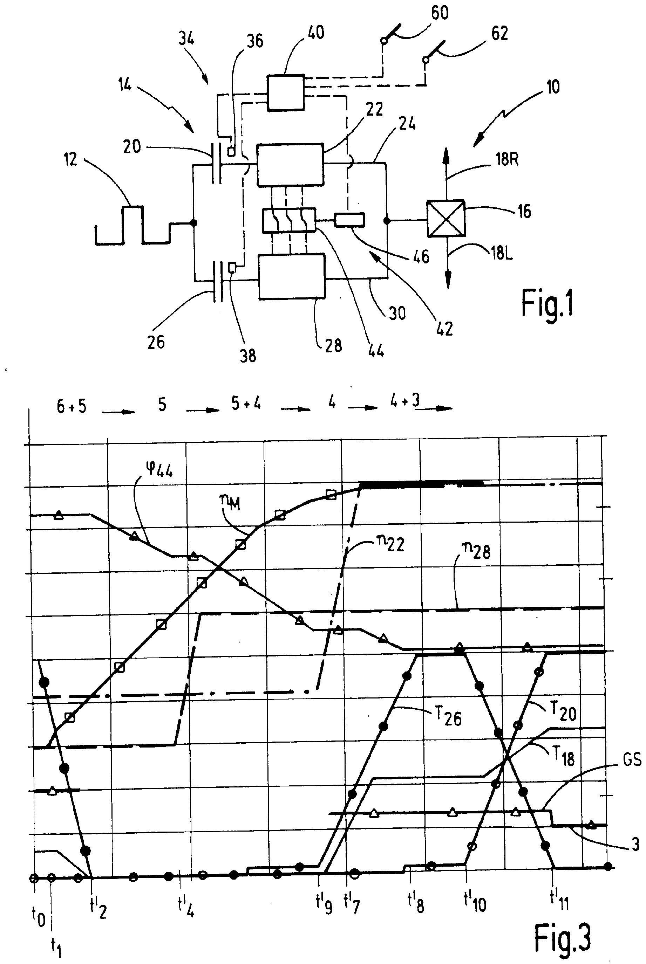

Fig. 1 zeigt in schematischer Form einen Antriebsstrang für ein Kraftfahrzeug für einen Personenkraftwagen, wobei der Antriebsstrang generell mit 10 bezeichnet ist. Der Antriebsstrang 10 beinhaltet einen Antriebsmotor 12 wie einen Verbrennungsmotor oder eine Hybridantriebseinheit, ein Doppelkupplungsgetriebe 14 sowie ein Differential 16, mittels dessen Antriebsleistung auf angetriebene Räder 18L, 18R des Kraftfahrzeugs verteilbar ist.

Das Doppelkupplungsgetriebe 14 weist eine erste Reibkupplung 20 und ein erstes Teilgetriebe 22 auf, die einen ersten Leistungsübertragungszweig 24 bilden. Das erste Teilgetriebe 22 beinhaltet Vorwärtsgangstufen 1, 3, 5, 7. Ferner weist das Doppelkupplungsgetriebe 14 eine zweite Reibkupplung 26 und ein zweites Teilgetriebe 28 auf, die einen zweiten Leistungsübertragungszweig 30 bilden. Das zweite Teilgetriebe 28 weist die geraden Vorwärtsgangstufen 2, 4, 6, und gegebenenfalls 8 auf, und weist vorliegend vorzugsweise auch eine Rückwärtsgangstufe R auf.

Zudem beinhaltet das Doppelkupplungsgetriebe 14 eine Kupplungsaktuatoreinrichtung 34 mit einem ersten Kupplungsaktuator 36 und einem zweiten Kupplungsaktuator 38. Die Kupplungsaktuatoren 36, 38 werden von einer Steuereinrichtung 40 angesteuert und dienen dazu, die Reibkupplungen 20, 26 zu öffnen, zu schließen, oder in einen Schlupfzustand zu versetzen. Die Kupplungsaktuatoren 36, 38 können elektromechanische oder hydraulische Aktuatoren sein.

Ferner weist das Doppelkupplungsgetriebe 14 eine Schaltaktuatoreinrichtung 42 zum Ein- und Auslegen der Gangstufen des Doppelkupplungsgetriebes 14 auf. Die Schaltaktuatoreinrichtung 42 beinhaltet eine einzelne Schaltwalze 44, die von einem Elektromotor 46 angetrieben ist.

Die Schaltwalze 44 dient zum Ein- und Auslegen der Gangstufen des ersten Teilgetriebes 22 und t zum Ein- und Auslegen der Gangstufen des zweiten Teilgetriebes 28.

Die Schaltwalze 44 weist dabei nicht näher bezeichnete Schaltkonturen auf, und die damit angesteuerten Gangstufen sind an der Schaltwalze 44 in Umfangsrichtung verteilt angeordnet.

Ferner zeigt Fig. 1, dass die Steuereinrichtung 40 ein Signal von einem Gaspedal 60 sowie von einem Bremspedal 62 empfängt. Hierzu sind dem Gaspedal 60 und dem Bremspedal 62 geeignete Sensoren, wie beispielsweise Wegsensoren zugeordnet, die beispielsweise den Weg s des Gaspedals 60 messen und an die Steuereinrichtung 40 weitergeben.

Der Antriebsstrang 10 wird gewöhnlich auf konventionelle Art und Weise betrieben. Das heißt, Antriebsleistung wird jeweils über einen Leistungsübertragungszweig 24 oder 30 übertragen. In dem anderen Leistungsübertragungszweig wird eine Gangstufe vorgewählt. Die Antriebsleistung kann dann auf den anderen Leistungsübertragungszweig übergeben werden, indem die Reibkupplungen 20, 26 auf überschneidende Art und Weise betätigt werden, so dass Gangwechsel ohne Zugkrafteinbruch durchgeführt werden können.

Bei Doppelkupplungsgetrieben, deren Schaltaktuatoreinrichtung eine einzelne Schaltwalze aufweist, können Mehrfachrückschaltungen, wie sie beispielsweise in herkömmlichen Doppelkupplungsgetriebe mittels eines sogenannten Kickdown ausgelöst werden, eine vergleichsweise lange Zeit benötigen.

Vorliegend wird für derartige Mehrfachrückschaltungen vorgeschlagen, die Quellgangstufen-Reibkupplung, die dem Quellgangstufen-Teilgetriebe zugeordnet ist, in dem die Quellgangstufe eingelegt ist, sofort zu öffnen, nachdem ein Schaltwunsch für die Mehrfachrückschaltung erhalten ist. Hierbei wird ggf. eine Zugkraftunterbrechung in Kauf genommen. Anschließend wird wenigstens eine Zwischengangstufe zur Leistungsübertragung über einen der Zwischengangstufe zugeordneten Zwischengangstufen-Leistungsübertragungszweig genutzt, wobei die Zwischengangstufe einem anderen Teilgetriebe als die Zielgangstufe zugeordnet ist und benachbart zu der Zielgangstufe ist. Schließlich wird die Zielgangstufe eingelegt und die Reibkupplungen werden überschneidend betätigt, wobei die der Zielgangstufe zugeordnete Reibkupplung geschlossen wird.

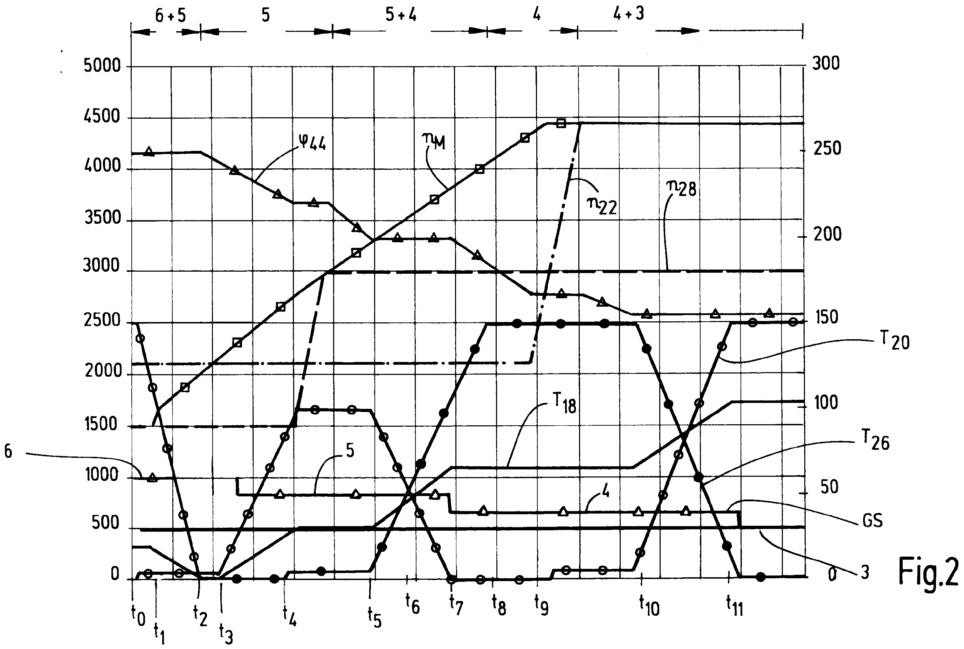

Beispiele derartiger Verfahren sind in den Figuren 2 und 3 dargestellt. Die Figuren 2 und 3 sind jeweils Zeitablaufdiagramme, die folgende Zustandsgrößen des Antriebsstranges zeigen:
- n_{M}: Drehzahlantriebsmotor 12
- ϕ₄₄: Drehposition der Schaltwalze 44
- n₂₂: Eingangsdrehzahl des Teilgetriebes 22 mit den ungeraden Gangstufen
- n₂₈: Eingangsdrehzahl des Teilgetriebes 28 mit den geraden Gangstufen
- T₂₀: Drehmoment der ersten Reibkupplung 20, die den ungeraden Gangstufen zugeordnet ist
- T₂₆: Drehmoment der zweiten Reibkupplung 26, die den geraden Gangstufen zugeordnet ist
- T₁₈: Drehmoment an den angetriebenen Rädern 18
- GS: am Abtrieb 18 wirksame Gangstufe

Das Zeitablaufdiagramm der Fig. 2 zeigt auf der linken Seite die Drehzahl (in UpM) und das Raddrehmoment (in Nm). Auf der rechten Seite sind das Drehmoment der Reibkupplungen (in Nm), die Schaltposition (in Grad) dargestellt. Soweit in der nachfolgenden Beschreibung auf Zahlenwerte Bezug genommen wird, ist dies jedoch nicht einschränkend zu verstehen.

Das Verfahren der Fig. 2 geht aus von einem Zustand, bei dem eine hohe Quellgangstufe eingelegt ist, hier bspw. die Quellgangstufe 6. Ferner ist gezeigt, dass die der Quellgangstufe 6 zugeordnete Reibkupplung 26 geschlossen ist (T₂₆ = 150). Die andere Reibkupplung 20 ist geöffnet (T₂₀ = 0). Am Eingang des zweiten Teilgetriebes 28 liegt eine Drehzahl von 1500 an, die gleich der Drehzahl n_{M} des Antriebsmotors ist. Die Eingangsdrehzahl n₂₂ des anderen Teilgetriebes ergibt sich dadurch, dass in dem anderen Teilgetriebe bereits ein niedrigere Gangstufe (hier Gangstufe 5) eingelegt ist (n₂₂ = 2100).

Am Abtrieb wirkt folglich die Quellgangstufe 6 (GS = 6). Die Schaltwalze 44 hat eine der Gangstufe 6 zugeordnete Position, bei der gleichzeitig die Folgegangstufe 5 eingelegt ist (ϕ₄₄ = 4200).

Ausgehend von diesem Zustand, der bei t₀ gezeigt ist, wird ein Schaltwunsch für eine Mehrfachrückschaltung in eine niedrigere Zielgangstufe erhalten, hier die Zielgangstufe 3.

Nach dem Erhalt dieses Schaltwunsches (bspw. in der Steuereinrichtung 40 aufgrund einer Betätigung des Gaspedals 60 oder des Bremspedals 62) wird die der Quellgangstufe 6 zugeordnete Reibkupplung 26 sofort geöffnet, und zwar bei t₁. Dies führt dazu, dass aufgrund des angeforderten Zugmomentes die Drehzahl n_{M} des Antriebsmotors 12 stark ansteigt (ab t₁). Parallel hierzu wird die erste Reibkupplung 20 vorbefüllt, d.h. soweit befüllt, dass sie annähernd an ihrem Eingriffspunkt oder auf dem Eingriffspunkt ist (T₂₀ = ungleich 0 und ≤ bspw. 20 Nm).

Ab t₁ fällt folglich das am Abtrieb zur Verfügung stehende Drehmoment T₁₈ ab, bis auf 0 zu einem Zeitpunkt t₂, bei dem die Reibkupplung 26 vollständig geöffnet ist. In einem Folgezeitabschnitt bis t₃ wird von dem Antriebsstrang kein Moment auf dem Abtrieb übertragen (T₁₈ = 0). Hier tritt folglich eine Zugkraftunterbrechung ein. Ab t₃ ist die Drehzahl n_{M} des Antriebsmotors soweit gestiegen, dass die erste Reibkupplung 20 geschlossen werden kann. Diese Reibkupplung 20 wird bis zum Zeitpunkt t₄ geschlossen, jedoch nicht vollständig, so dass T₂₀ (t₄) < als T₂₆ (t₀)). Dieses nicht vollständige Schließen der ersten Reibkupplung 20 führt dazu, dass die Motordrehzahl n_{M} weiter schnell ansteigen kann. Nichtsdestotrotz wird während der Phase von t₄ bis t₅ über die Gangstufe 5 (= Interimsgangstufe) ein Drehmoment übertragen, so dass in dem Bereich von t₄ bis t₅ am Abtrieb ein Drehmoment T₁₈ von etwa 500 Nm anliegt. Während der Zeit zwischen t₄ und t₅ wird die Schaltwalze weitergedreht und die nächste Gangstufe wird synchronisiert, so dass ab einem Zeitpunkt zwischen t₄ und t₅ die Gangstufen 5 und 4 gleichzeitig eingelegt sind.

Ab dem Zeitpunkt t₅ wird die überschneidende Betätigung der Reibkupplungen 20, 26 eingeleitet, bei der die erste Reibkupplung 20 geöffnet wird und die zweite Reibkupplung 26 wieder geschlossen wird, so dass die Überschneidung etwa zum Zeitpunkt t₆ stattfindet und zum Zeitpunkt t₇ die am Abtrieb wirksame Gangstufe die Gangstufe 4 ist (GS = 4). Ferner wird ab diesem Zeitpunkt ein Moment T₁₈ auf den Abtrieb gegeben, das größer ist als das zuletzt übertragene Moment (hier beispielhaft 1100 Nm). Die zweite Reibkupplung 26 wird hierbei wieder vollständig geschlossen (etwa von t₈ bis t₁₀).

Die in dem Zeitpunkt von t₇ bis t₁₀ wirksame Gangstufe 4 ist eine Zwischengangstufe.

In einem Zeitpunkt dazwischen (etwa bei t₉) findet eine Synchronisierung der Zielgangstufe statt, indem die Schaltwalze weitergedreht und die Synchronisierung der Zielgangstufe durch entsprechende Bestromung eines die Schaltwalze 44 antreibenden Elektromotors erfolgt. Kurz nach t₉ erfolgt wieder ein Vorbefüllen der ersten Reibkupplung, so dass eine überschneidende Betätigung der Reibkupplungen 20, 26 in einem Zeitpunkt von t₁₀ bis t₁₁ stattfindet. Ab t₁₁ ist die Zielgangstufe eingelegt, und am Abtrieb steht ein hohes Drehmoment zur Verfügung (t₈ = 1700 Nm).

Die Synchronisierung der Zielgangstufe findet, wie gesagt, etwa bei t₉ statt, so dass zu diesem Zeitpunkt die Drehzahl n₂₂ des ersten Teilgetriebes ansteigt, und zwar soweit, bis sie gleich der Antriebsdrehzahl n_{M}, was Voraussetzung für die anschließende überschneidende Betätigung der Reibkupplungen 20, 26 ist.

In Fig. 3 ist eine alternative Ausführungsform gezeigt, die hinsichtlich des Ablaufes weitgehend der Ausführungsform der Fig. 2 entspricht.

Bei dem Ablauf der Fig. 3 wird jedoch das Einlegen der Interimsgangstufe 5 und das Nutzen der Interimsgangstufe über den zugeordneten Leistungsübertragungszweig weggelassen, so dass über einen längeren Zeitpunkt (etwa von t₂' bis t₇') an dem Abtrieb kein Drehmoment zur Verfügung steht (T₁₈ = 0). Die übrigen Abläufe entsprechen jenen der Ausführungsform der Fig. 2, wobei die entsprechenden Zeitpunkte genauso bezeichnet sind wie bei der Ausführungsform der Fig. 2. Es ist dabei gezeigt, dass bereits zu einem Zeitpunkt t₉' die Zielgangstufe synchronisiert wird, was noch früher sein kann, als bei der Ausführungsform der Fig. 2, so dass trotz des relativ langen Zugkrafteinbruchs von t₂' bis t₉' das Einlegen der Zielgangstufe 3 in sehr kurzer Zeit erfolgen kann.

## Patentansprüche

1. Verfahren zum Steuern eines Antriebsstranges (10) eines Kraftfahrzeuges, der einen Antriebsmotor (12) und ein Doppelkupplungsgetriebe (14) aufweist, wobei das Doppelkupplungsgetriebe (14) eine erste Reibkupplung (20) und eine zweite Reibkupplung (26) sowie ein erstes Teilgetriebe (22) und ein zweites Teilgetriebe (28) aufweist, um einen ersten Leistungsübertragungszweig (24) und einen zweiten Leistungsübertragungszweig (30) einzurichten, wobei das Doppelkupplungsgetriebe (14) eine Kupplungsaktuatoreinrichtung (34) zum Betätigen der Reibkupplungen (20, 26) sowie eine Schaltaktuatoreinrichtung (42) zum Ein- und Auslegen von Gangstufen (1-7, R) des Doppelkupplungsgetriebes (14) aufweist, mit den folgenden, von einem Fahrbetrieb des Kraftfahrzeuges in einer hohen Quellgangstufe (6) ausgehenden Schritten zum Durchführen einer Mehrfachrückschaltung in eine niedrige Zielgangstufe (3):
- sofortiges Öffnen der Quellgangstufen-Reibkupplung (26), die dem Quellgangstufen-Teilgetriebe (28) zugeordnet ist, in dem die Quellgangstufe (6) eingelegt ist, nachdem ein Schaltwunsch für die Mehrfachrückschaltung erhalten ist,
- Nutzen wenigstens einer Zwischengangstufe (4) zur Leistungsübertragung über einen der Zwischengangstufe (4) zugeordneten Zwischengangstufen-Leistungsübertragungszweig (24), wobei die Zwischengangstufe (4) in einem anderen Teilgetriebe als die Zielgangstufe (3) zugeordnet ist und benachbart zu der Zielgangstufe (3) ist, und
- Einlegen der Zielgangstufe (3) sowie überschneidende Betätigung der Reibkupplungen (20, 26), wobei die der Zielgangstufe (3) zugeordnete Reibkupplung (20) geschlossen wird,
**dadurch gekennzeichnet, dass**
das Öffnen der Quellgangstufen-Reibkupplung (26) durchgeführt wird, ohne sofort die Zwischengangstufen-Reibkupplung (20) zu schließen.

2. Steuerverfahren nach Anspruch 1, **dadurch gekennzeichnet, dass** vor der Leistungsübertragung über die Zwischengangstufe (4) eine Interimsgangstufe (5) zur Leistungsübertragung über den der Interimsgangstufe (5) zugeordneten Leistungsübertragungszweig (24) genutzt wird, wobei der Übergang von der Interimsgangstufe (5) in die Zwischengangstufe (4) durch überschneidende Betätigung der Reibkupplungen (20, 26) erfolgt.

3. Steuerverfahren nach Anspruch 2, **dadurch gekennzeichnet, dass** die der Interimsgangstufe (5) zugeordnete Reibkupplung (20) bei der Leistungsübertragung über den der Interimsgangstufe (5) zugeordneten Leistungsübertragungszweig (24) nicht vollständig geschlossen wird.

4. Steuerverfahren nach einem der Ansprüche 1 - 3, **dadurch gekennzeichnet, dass** die Mehrfachrückschaltung unter Zug erfolgt.

5. Steuerverfahren nach einem der Ansprüche 1 - 4, **dadurch gekennzeichnet, dass** das Doppelkupplungsgetriebe (14) eine einzelne Schaltwalzen (44) zum Ein- und Auslegen von Gangstufen des ersten und des zweiten Teilgetriebes (22, 28) aufweist.

6. Antriebsstrang (10) für ein Kraftfahrzeug, der einen Antriebsmotor (12) und ein Doppelkupplungsgetriebe (14) aufweist, wobei das Doppelkupplungsgetriebe (14) eine erste Reibkupplung (20) und eine zweite Reibkupplung (26) sowie ein erstes Teilgetriebe (22) und ein zweites Teilgetriebe (28) aufweist, um einen ersten Leistungsübertragungszweig (24) und einen zweiten Leistungsübertragungszweig (30) einzurichten, wobei das Doppelkupplungsgetriebe (14) eine Kupplungsaktuatoreinrichtung (34) zum Betätigen der Reibkupplungen (20, 26) sowie eine Schaltaktuatoreinrichtung (42) zum Ein- und Auslegen von Gangstufen (1-7, R) des Doppelkupplungsgetriebes (14) aufweist; mit einer Steuereinrichtung (40), die dazu ausgebildet und eingerichtet ist, ein Verfahren zum Steuern des Antriebsstranges (10) durchzuführen mit den folgenden, von einem Fahrbetrieb des Kraftfahrzeuges in einer hohen Quellgangstufe (6) ausgehenden Schritten zum Durchführen einer Mehrfachrückschaltung in eine niedrige Zielgangstufe (3):
- sofortiges Öffnen der Quellgangstufen-Reibkupplung (26), die dem Quellgangstufen-Teilgetriebe (28) zugeordnet ist, in dem die Quellgangstufe (6) eingelegt ist, nachdem ein Schaltwunsch für die Mehrfachrückschaltung erhalten ist,
- Nutzen wenigstens einer Zwischengangstufe (4) zur Leistungsübertragung über einen der Zwischengangstufe (4) zugeordneten Zwischengangstufen-Leistungsübertragungszweig (24), wobei die Zwischengangstufe (4) in einem anderen Teilgetriebe als die Zielgangstufe (3) zugeordnet ist und benachbart zu der Zielgangstufe (3) ist, und
- Einlegen der Zielgangstufe (3) sowie überschneidende Betätigung der Reibkupplungen (20, 26), wobei die der Zielgangstufe (3) zugeordnete Reibkupplung (20) geschlossen wird,
**dadurch gekennzeichnet, dass**
die Steuereinrichtung (40) dazu ausgebildet und eingerichtet ist, die Quellgangstufen-Reibkupplung (26) zu öffnen, ohne sofort die Zwischengangstufen-Reibkupplung (20) zu schließen.

## Claims

1. Method for controlling a drivetrain (10) of a motor vehicle, the drive train having a drive engine (12) and a dual clutch transmission (14), wherein the dual clutch transmission (14) comprises a first friction clutch (20) and a second friction clutch (26) and a first component transmission (22) and a second component transmission (28), for establishing a first power transmission branch (24) and a second power transmission branch (30), wherein the dual clutch transmission (14) comprises a clutch actuator apparatus (34) for actuating the friction clutches (20, 26) and a shift actuator apparatus (42) for engaging and disengaging gear stages (1-7, R) of the dual clutch transmission (14), with the following steps, starting from a driving operation of the vehicle in a high source gear stage (6), for carrying out a multiple back shift into a low target gear stage (3):
- immediate opening of the source gear stage friction clutch (26), which is assigned to the source gear stage component transmission (28), in which the source gear stage (6) is engaged, after an intention for the multiple back shift has been received,
- using at least one intermediate gear stage (4) for transferring power via an intermediate gear stage power transmission branch (24) which is assigned to the intermediate gear stage (4), wherein the intermediate gear stage (4) is assigned another component transmission than the target gear stage (3) and is adjacent to the target gear stage (3), and
- engaging the target gear stage (3) and overlappingly actuating the friction clutches (20, 26), wherein the friction clutch (20) which is assigned to the target gear stage (3) is closed,
**characterized in that**
the opening of the source gear stage friction clutch (26) is carried out without immediately closing the intermediate gear stage friction clutch (20).

2. Control method according to claim 1, **characterized in that** before the power transmission via the intermediate gear stage (4) an interim gear stage (5) is used for power transmission via the power transmission branch (24) which is assigned to the interim gear stage (5), wherein the change from the interim gear stage (5) to the intermediate gear stage (4) is carried out by overlappingly actuating of the friction clutches (20, 26).

3. Control method according to claim 2, **characterized in that** the friction clutch (20) assigned to the interim gear stage (5) is not completely closed during the power transmission via the power transmission branch (24) which is assigned to the interim gear stage (5).

4. Control method according to one of claims 1 - 3, **characterized in that** the multiple back shift is carried out under traction.

5. Control method according to one of claims 1 - 4, **characterized in that** the dual clutch transmission (14) comprises a single shift drum (44) for engaging and disengaging of gear stages of the first and the second component transmission (22, 28).

6. Drivetrain (10) for a motor vehicle, the drive train having a drive engine (12) and a dual clutch transmission (14), wherein the dual clutch transmission (14) comprises a first friction clutch (20) and a second friction clutch (26) and a first component transmission (22) and a second component transmission (28), for establishing a first power transmission branch (24) and a second power transmission branch (30), wherein the dual clutch transmission (14) comprises a clutch actuator apparatus (34) for actuating the friction clutches (20, 26) and a shift actuator apparatus (42) for engaging and disengaging gear stages (1-7, R) of the dual clutch transmission (14); with a control unit (40), which is constructed and configured to carry out a method for controlling the drivetrain (10) with the following steps, starting from a driving operation of the vehicle in a high source gear stage (6), for carrying out a multiple back shift into a low target gear stage (3):
- immediate opening of the source gear stage friction clutch (26), which is assigned to the source gear stage component transmission (28), in which the source gear stage (6) is engaged, after an intention for a multiple back shift has been received,
- using at least one intermediate gear stage (4) for transferring power via an intermediate gear stage power transmission branch (24) which is assigned to the intermediate gear stage (4), wherein the intermediate gear stage (4) is assigned another component transmission than the target gear stage (3) and is adjacent to the target gear stage (3), and
- engaging the target gear stage (3) and overlappingly actuating the friction clutches (20, 26), wherein the friction clutch (20) which is assigned to the target gear stage (3) is closed,
**characterized in that**
the control unit (40) is constructed and configured to open the source gear stage friction clutch (26) without immediately closing the intermediate gear stage friction clutch (20).

## Revendications

1. Procédé de commande du train d'entraînement (10) d'un véhicule automobile qui présente un moteur d'entraînement (12) et une transmission (14) à double embrayage,
la transmission (14) à double embrayage présentant un premier embrayage par friction (20) et un deuxième embrayage par friction (26) ainsi qu'une première transmission partielle (22) et qu'une deuxième transmission partielle (28) qui établissent une première branche (24) de transfert de puissance et une deuxième branche (30) de transfert de puissance,
la transmission (14) à double embrayage présentant un dispositif (34) d'actionnement d'embrayage qui actionne les embrayages à friction (20, 26) ainsi qu'un dispositif (42) d'actionneur de changement de rapport de transmission qui établit et libère des rapports de transmission (1-7, R) de la transmission (14) à double embrayage,
le procédé présentant les étapes suivantes d'exécution d'un abaissement sur plusieurs rapports de transmission vers un rapport de transmission plus bas (3) visé, à partir du fonctionnement du véhicule automobile dans un rapport de transmission source (6) plus élevé :
ouverture immédiate de l'embrayage à friction (26) du rapport de transmission source associé à la transmission partielle (28) du rapport de transmission source dans lequel le rapport (6) de transmission source est placé après qu'une demande d'abaissement sur plusieurs rapports de transmission a été reçue,
utilisation d'au moins un rapport intermédiaire de transmission (4) en vue du transfert de puissance par l'intermédiaire d'une branche (24) de transfert de puissance sur un rapport intermédiaire de transmission associée au rapport intermédiaire (4) de la transmission, le rapport intermédiaire (4) de la transmission étant associé à une transmission partielle autre que celle du rapport de transmission (3) visé et étant voisin du rapport de transmission (3) visé et
établissement du rapport de transmission (3) visé et actionnement superposé des embrayages à friction (20, 26), l'embrayage à friction (20) associé au rapport de transmission (3) visé étant fermé,
**caractérisé en ce que**
l'ouverture de l'embrayage à friction (26) du rapport de transmission source est réalisée sans fermer immédiatement l'embrayage à friction (20) du rapport intermédiaire de transmission.

2. Procédé de commande selon la revendication 1, **caractérisé en ce qu'**avant le transfert de puissance par l'intermédiaire du rapport intermédiaire de transmission (4), un rapport intérimaire de transmission (5) est utilisé pour transférer la puissance par l'intermédiaire de la branche (24) de transfert de puissance associée au rapport intérimaire de transmission (5), le passage du rapport intérimaire de transmission (5) au rapport intermédiaire de transmission (4) s'effectuant par actionnement superposé des embrayages à friction (20, 26).

3. Procédé de commande selon la revendication 2, **caractérisé en ce que** l'embrayage à friction (20) associé au rapport intérimaire de transmission (5) n'est pas complètement fermé lors du transfert de puissance par l'intermédiaire de la branche (24) de transfert de puissance associée au rapport intérimaire de transmission (5).

4. Procédé de commande selon l'une des revendications 1 à 3, **caractérisé en ce que** l'abaissement sur plusieurs rapports de transmission s'effectue en traction.

5. Procédé de commande selon l'une des revendications 1 à 4, **caractérisé en ce que** la transmission (14) à double embrayage présente un unique arbre de changement de rapport (44) pour l'établissement et la libération de rapports de transmission de la première et de la deuxième transmission partielle (22, 28).

6. Train d'entraînement (10) pour véhicule automobile, d'un véhicule automobile qui présente un moteur d'entraînement (12) et une transmission (14) à double embrayage,
la transmission (14) à double embrayage présentant un premier embrayage par friction (20) et un deuxième embrayage par friction (26) ainsi qu'une première transmission partielle (22) et qu'une deuxième transmission partielle (28) qui établissent une première branche (24) de transfert de puissance et une deuxième branche (30) de transfert de puissance,
la transmission (14) à double embrayage présentant un dispositif (34) d'actionnement d'embrayage qui actionne les embrayages à friction (20, 26) ainsi qu'un dispositif (42) d'actionneur de changement de rapport de transmission qui établit et libère des rapports de transmission (1-7, R) de la transmission (14) à double embrayage,
un dispositif de commande (40) configuré et conçu pour mettre en oeuvre un procédé de commande du train d'entraînement (10) présentant les étapes suivantes d'exécution d'un abaissement sur plusieurs rapports de transmission vers un rapport de transmission plus bas (3) visé, à partir du fonctionnement du véhicule automobile dans un rapport de transmission source (6) plus élevé :
ouverture immédiate de l'embrayage à friction (26) du rapport de transmission source associé à la transmission partielle (28) du rapport de transmission source dans lequel le rapport (6) de transmission source est placé après qu'une demande d'abaissement sur plusieurs rapports de transmission a été reçue,
utilisation d'au moins un rapport intermédiaire de transmission (4) en vue du transfert de puissance par l'intermédiaire d'une branche (24) de transfert de puissance sur un rapport intermédiaire de transmission associée au rapport intermédiaire (4) de la transmission, le rapport intermédiaire (4) de la transmission étant associé à une transmission partielle autre que celle du rapport de transmission (3) visé et étant voisin du rapport de transmission (3) visé et
établissement du rapport de transmission (3) visé et actionnement superposé des embrayages à friction (20, 26), l'embrayage à friction (20) associé au rapport de transmission (3) visé étant fermé,
**caractérisé en ce que**
le dispositif de commande (40) est configuré et conçu pour ouvrir l'embrayage à friction (26) du rapport de transmission source sans fermer immédiatement l'embrayage à friction (20) du rapport de transmission intermédiaire.
